Europäisches Patentamt

**European Patent Office**

Office européen des brevets

(19)

(11) Numéro de publication: **0 220 115 B1**

(12) **FASCICULE DE BREVET EUROPEEN**

(45) Date de publication du fascicule du brevet:
28.03.90

(51) Int. Cl.⁴: **G01M 17/04, F16F 9/32**

(21) Numéro de dépôt: **86402254.6**

(22) Date de dépôt: **10.10.86**

(54) **Procédé de contrôle d'une suspension de véhicule par mesure du coefficient de frottement de l'amortisseur et dispositif pour la mise en oeuvre du procédé.**

(30) Priorité: **11.10.85 FR 8515083**

(43) Date de publication de la demande:
**29.04.87 Bulletin 87/18**

(45) Mention de la délivrance du brevet:
**28.03.90 Bulletin 90/13**

(84) Etats contractants désignés:
**DE GB IT**

(56) Documents cités:
**DE-A- 2 043 526**
**DE-A- 2 905 931**
**DE-A- 3 316 011**
**GB-A- 2 093 946**
**US-A- 4 458 234**

(73) Titulaire: **JAEGER, 2, rue Baudin,
F-92303 Levallois-Perret(FR)**

(72) Inventeur: **Delevallee, Jean-Louis, 14 Allée des Courlis,
F-95600 Cergy Saint Christophe(FR)**
Inventeur: **Reymond, Philippe, 26, rue Georges Boulet,
F-91330 Yerres(FR)**

(74) Mandataire: **Martin, Jean-Jacques et al, Cabinet
REGIMBEAU 26, Avenue Kléber, F-75116 Paris(FR)**

## Description

La présente invention concerne le contrôle de la suspension des véhicules automobiles.

On sait que les suspensions de véhicules automobiles sont généralement composées , pour chacune des roues, d'un ensemble, formé d'un amortisseur relié en parallèle à un ressort, disposé entre les masses suspendues et les masses non suspendues du véhicule.

On entend par masses suspendues l'ensemble des parties de la caisse du véhicule qui reposent sur la suspension ; tandis que l'on entend par masses non suspendues l'ensemble des masses mobiles par rapport à la caisse, et en particulier les roues et triangles de suspension. Le cas échéant, les masses non suspendues comprennent également les freins et une partie des amortisseurs.

Le ressort de la suspension a pour fonction première de limiter la propagation, vers la caisse du véhicule, des mouvements verticaux des roues, afin d'accroître le confort routier.

Néanmoins, après avoir encaissé une irrégularité de la route le ressort ne retrouve pas rapidement sa position d'équilibre stable. L'énergie qu'il a emmagasinée tend à induire des oscillations de la caisse ainsi que des chocs et rebonds de la roue sur le sol pendant lesquels cette énergie se dissipe en chaleur.

Pour éviter cet inconvénient, on a proposé depuis longtemps de placer en parallèle du ressort un amortisseur dont le rôle est précisément de dissiper l'énergie emmagasinée dans le ressort, donc d'empêcher la création de mouvements parasites nocifs pour la qualité du confort et de la tenue de route.

L'amortisseur le plus couramment usité se compose d'un corps lié rigidement aux masses non suspendues, qui définit une chambre principale remplie d'un fluide hydraulique, d'une tige coulissante, liée rigidement à la caisse du véhicule et à un piston percé de trous calibrés et équipés de clapets, qui se déplace dans la chambre principale et d'une chambre secondaire, dite de compensation, remplie partiellement de gaz et de fluide hydraulique, qui communique avec la chambre principale par l'intermédiaire de clapets.

Néanmoins, d'autres types d'amortisseurs pour suspension de véhicules ont été proposés.

La présente invention n'est pas limitée à un type d'amortisseur particulier.

La fonction de l'amortisseur est donc de transformer en chaleur l'énergie mécanique de mouvement de sa tige. Pour cela, l'amortisseur oppose au mouvement de sa tige une force sensiblement proportionnelle à la vitesse de cette dernière.

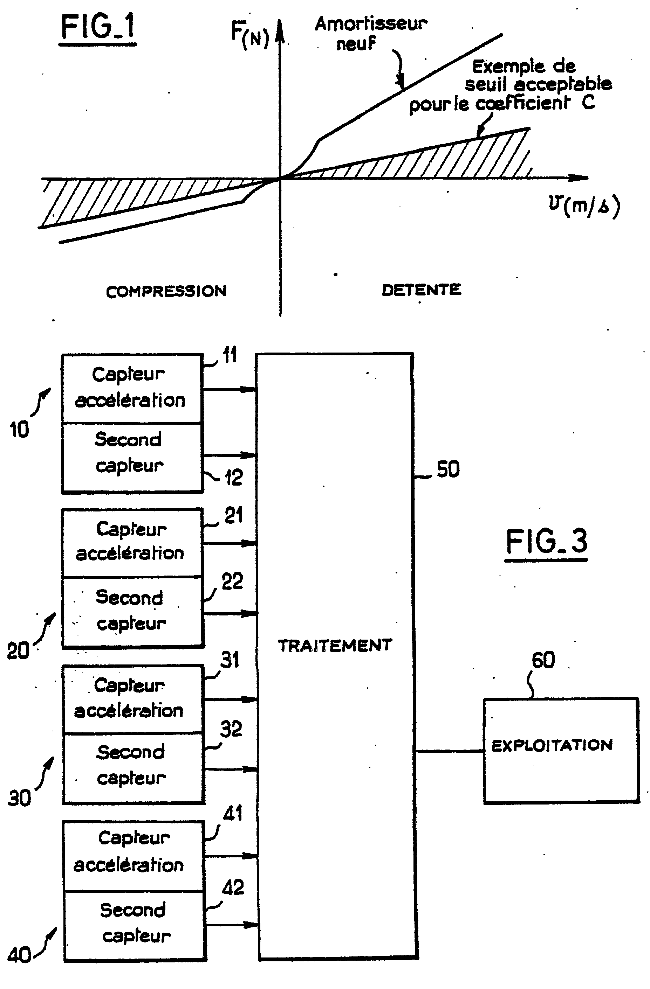

On a représenté schématiquement, sur la figure 1 annexée, la courbe : force appliquée sur la tige/ vitesse de la tige, d'un amortisseur.

Chaque partie de cette courbe, force appliquée sur la tige/vitesse de la tige, correspondant respectivement à la détente et à la compression de l'amortisseur, comporte deux zones.

La zone de courbe linéaire correspond aux conditions de fonctionnement où le fluide hydraulique circule par les clapets.

Quand la vitesse de la tige diminue la pression du fluide atteint une valeur seuil au-des sous de laquelle les clapets ne peuvent plus fonctionner. Le fluide hydraulique circule alors par les orifices calibrés. Cela correspond à la seconde zone de la courbe, de type parabolique.

On sait néanmoins que le vieillissement a pour effet de diminuer la viscosité du fluide hydraulique et d'abaisser progressivement l'efficacité des multiples étanchéités de l'amortisseur, notamment au niveau des joints et clapets.

Cela provoque bien sûr un affaissement de la caractéristique force/vitesse. Cet affaissement peut d'ailleurs apparaître uniquement sur une des zones de la courbe (zone linéaire ou parabolique) avant de s'étendre aux suivantes.

On sait par ailleurs que l'état de la suspension influence dans une large mesure la tenue de route du véhicule.

Il est donc souhaitable de disposer de moyens permettant de contrôler la suspension des véhicules.

De nombreux moyens de contrôle à cet effet ont déjà été proposés. Toutefois, ces moyens ne donnent pas pleinement satisfaction.

On a ainsi proposé, comme décrit dans le brevet US-A-2 923 147 et dans le brevet Italien 431 283, des moyens de contrôle mécaniques. L'utilisation de ces moyens est cependant limitée aux garages d'entretien. De plus, ces moyens ne permettent qu'un contrôle statique. Enfin, ces moyens ne permettent par un contrôle fréquent voire continu de la suspension. Au mieux, ces moyens mécaniques sont utilisés généralement à une fréquence de l'ordre de une fois par an.

On a également proposé, comme décrit dans les brevets US-A-3 921 945 et US-A-3 937 152, des moyens de détection des vibrations d'un véhicule. Cette disposition ne permet pas cependant de réaliser un contrôle précis et fiable.

On a également proposé, comme décrit dans les brevets GB-A-1 483 231 et US-A-4 317 105, des moyens sensibles à l'accélération du véhicule dans la direction verticale. Là encore, cependant, les dispositions de ce type jusqu'ici proposées ne permettent pas de réaliser un contrôle précis et fiable.

On a également proposé, comme décrit dans le brevet GB-A-1 508 527, de comparer les caractéristiques force et vitesse d'un amortisseur en utilisant deux capteurs sensibles respectivement à ces données. Les moyens de test décrits dans ce document ne permettent pas cependant de contrôler de façon précise et fiable l'ensemble de la courbe force/vitesse.

On a également proposé, comme décrit dans les brevets US-A 3 833 094 et US-A 3 646 512 d'utiliser des détecteurs de surcharge. Ces dispositifs ne permettent qu'une détection du type tout ou rien et ne permettent pas de renseigner sur l'état de la suspension.

On a également proposé d'utiliser des jauges de contrainte pour mesurer les forces exercées en divers points de la suspension. De tels dispositifs sont par exemple décrits dans les brevets US-A 4 458 234, DE-A 2 351 862 et DE-A 2 341 423. Ces documents cependant se contentent d'évoquer, pour l'exploitation des signaux électriques délivrés par les jauges, l'agencement de ces jauges en pont ou encore la mesure des variations d'amplitude, positives ou négatives, des forces exercées sur l'amortisseur et/ou le ressort. Ces dispositions ne délivrent qu'une information globale sur le fonctionnement de la suspension et ne permettent pas de délivrer une information précise et fiable sur l'état de la suspension, utile au conducteur.

On a également proposé dans le document DE-A 2 043 526, un dispositif de test d'amortisseur hydropneumatique comprenant quatre capteurs: un capteur d'accélération des masses suspendues, un capteur de déplacement de l'axe et deux capteurs de pression reliés à des étages différents de l'amortisseur, ainsi que des moyens de traitement qui exploitent les signaux issus des capteurs.

Le problème posé est de concevoir une technique de mesure permettant de détecter de façon fiable, économique et continue, à l'aide de moyens embarcables, l'état de la suspension.

La demanderesse propose de résoudre le problème ainsi posé grâce à un procédé comprenant les étapes consistant à:

i) générer à l'aide d'un premier capteur un signal représentant l'accélération des masses suspendues dans la direction verticale,

ii) générer à l'aide d'un second capteur un signal dépendant de la force exercée par l'un des éléments — ressort ou amortisseur — de la suspension, et

iii) déterminer la valeur du coefficient de frottement visqueux de l'amortisseur à l'aide des signaux mesurés sur la base de l'équation définie par le bilan des forces exercées sur les masses suspendues.

Selon une première variante de réalisation conforme à la présente invention, le second capteur est un capteur de force monté sur l'amortisseur, et

— l'étape i) consiste à réaliser à l'aide du premier capteur la mesure de 3 valeurs discrètes $\alpha_0$, $\alpha_1$, $\alpha_2$ espacées d'un intervalle de temps T du signal représentatif de l'accélération des masses suspendues dans la direction verticale,

— l'étape ii) consiste à réaliser en synchronisme à l'aide du second capteur la mesure de 3 valeurs discrètes $\beta_0$, $\beta_1$, $\beta_2$ du signal représentatif de la force exercée par l'amortisseur, et

— l'étape iii) consiste à déterminer la valeur du coefficient de frottement visqueux de l'amortisseur sur la base de la relation:

$$(1) \qquad C = K.T \frac{\beta_1 (\alpha_0 - \alpha_1) - \beta_0 (\alpha_1 - \alpha_2)}{(\alpha_1 - \alpha_2)(\beta_1 - \beta_0) - (\alpha_0 - \alpha_1)(\beta_2 - \beta_1)}$$

dans laquelle:
K représente la raideur du ressort.

Selon une seconde variante de réalisation conforme à la présente invention, le second capteur est soit un capteur associé au ressort et sensible au déplacement relatif masses suspendues/masses non suspendues, par exemple formé d'une cellule piézoélectrique disposée entre deux spires du ressort de la suspension, dans le cas d'un ressort à boudin, soit un capteur de force, composé par exemple d'une cellule piézoélectrique, intercalé entre le ressort de la suspension et les masses suspendues ou les masses non suspendues, tandis que

— l'étape i) consiste à réaliser à l'aide du premier capteur la mesure de deux valeurs discrètes $\gamma_0$, $\gamma_1$ espacées d'un intervalle de temps T du signal représentatif de l'accélération des masses suspendues dans la direction verticale,

— l'étape ii) consiste à réaliser en synchronisme à l'aide du second capteur la mesure de 2 valeurs discrètes $\delta_0$, $\delta_1$ du signal représentatif de la force exercée par le ressort, et

— l'étape iii) consiste à déterminer la valeur du coefficient de frottement visqueux de l'amortisseur sur la base de la relation:

$$(2) \qquad C = KT \frac{\gamma_0 \delta_1 - \gamma_1 \delta_0}{(\gamma_1 - \gamma_0)(\delta_1 - \delta_0)}$$

dans laquelle:
K représente la raideur du ressort.

La présente invention concerne également des dispositifs de contrôle pour la mise en œuvre des procédés précités.

La présente invention concerne également des applications des dispositifs précités à la commande de suspensions asservies et à la détection de surcharge du véhicule.

D'autres caractéristiques et avantages de la présente invention apparaîtront à la lecture de la description détaillée qui va suivre et en regard des dessins annexés donnés à titre d'exemples non limitatifs et sur lesquels:

— la figure 1 représente la courbe force/vitesse d'un amortisseur,
— les figures 2A et 2B représentent de façon schématique la structure d'une suspension de véhicule dans le cadre des deux variantes de réalisation conformes à la présente invention,
— la figure 3 représente une vue schématique du dispositif de contrôle conforme à la présente invention,
— la figure 4 représente schématiquement le procédé de contrôle conforme à une première variante de réalisation de la présente invention, et
— la figure 5 représente schématiquement le procédé de contrôle conforme à une seconde variante de réalisation de la présente invention.

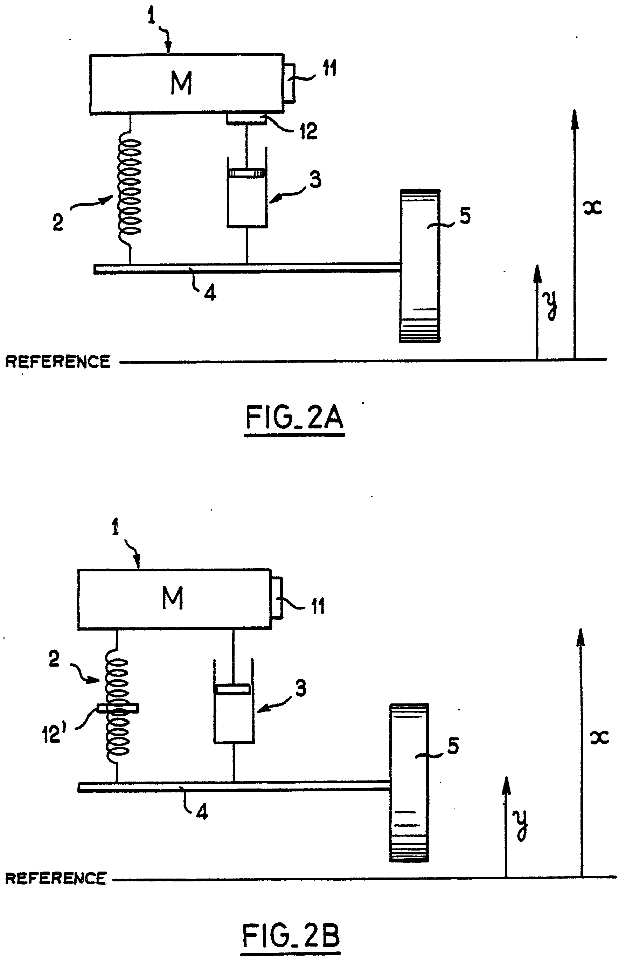

On retrouve sur les figures 2A et 2B annexées la masse suspendue 1 correspondant à la caisse du véhicule, la masse non suspendue 4 portant une roue 5, le ressort de suspension 2 et l'amortisseur de suspension 3, ces deux éléments étant montés en parallèle entre la masse suspendue 1 et la masse non suspendue 4.

On aperçoit par ailleurs à l'examen des figures 2A et 2B un premier capteur 11 placé sur la caisse d'un véhicule et adapté pour générer un signal représentatif de l'accélération de la caisse dans la direction verticale.

On aperçoit également à l'examen de la figure 2A un capteur de force 12 monté sur la fixation supérieure de l'amortisseur, tandis que l'on aperçoit sur la figure 2B un capteur 12′ de déplacement monté sur le ressort de suspension.

La position des capteurs illustrée sur les figures 2A et 2B ne doit bien entendu pas être considérée comme limitative.

Ainsi par exemple, dans le cadre de la première variante représentée sur la figure 2A le capteur de force 12 peut être monté sur la fixation inférieure de l'amortisseur.

De même dans le cadre de la seconde variante représentée sur la figure 2B, le capteur 12′ peut être un capteur de force intercalé entre le ressort de suspension 2 et les masses suspendues 1 ou les masses non suspendues 4, ou encore un autre type de capteur associé au ressort et sensible au déplacement masses suspendues/masses non suspendues.

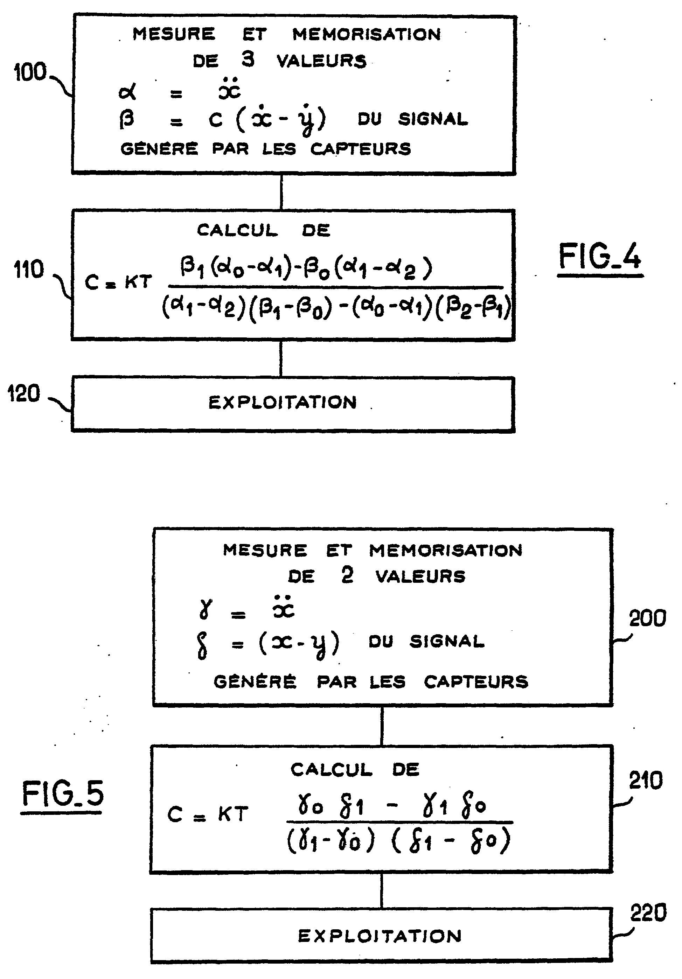

De préférence, comme cela est illustré schématiquement sur la figure 3, une paire de premier et second capteurs est associée à chaque suspension.

On a ainsi représenté schématiquement sur la figure 3 un dispositif de contrôle conforme à la présente invention pour véhicule automobile à 4 roues.

On distingue en effet sur cette figure 3 quatre paires 10, 20, 30, 40 de capteurs comprenant chacune un premier capteur 11, 21, 31, 41 générant un signal dépendant de l'accélération de la caisse, dans la direction verticale, et un second capteur 12, 22, 32, 42 générant un signal dépendant de la force exercée soit par le ressort soit par l'amortisseur de la suspension.

Les signaux générés par les capteurs 11, 12; 21, 22; 31, 32; 41, 42 sont appliqués à des moyens de traitement 50 qui commandent eux-mêmes des moyens d'exploitation, par exemple de visualisation 60.

Les moyens de traitement 50 sont adaptées pour mémoriser soit plusieurs mesures discrètes issues de chaque capteur 11, 21, 31, 41 associé à la caisse et espacées d'un intervalle de temps T, soit plusieurs valeurs échantillonnées du signal analogique continu issu de chaque capteur 11, 21, 31, 41.

Les moyens de traitement 50 sont de plus adaptés pour mémoriser soit un même nombre de mesures discrètes issues de chaque capteur 12, 22, 32, 42 simultanément à la mémorisation de l'une des informations issues du capteur 11, 21, 31, 41, soit plusieurs valeurs échantillonnées, en synchronisme, du signal analogique continu issu de chaque capteur 12, 22, 32, 42.

Plus précisément, dans le cadre de la première variante de réalisation conforme à la présente invention, dans laquelle le second capteur 12 est un capteur de force associé à l'amortisseur 3, les moyens de traitement 50 sont de préférence adaptés pour mémoriser trois valeurs discrètes $\alpha_0$, $\alpha_1$, $\alpha_2$ espacées d'un intervalle de temps T, du signal issu de chaque premier capteur 11, et donc représentatives de l'accélération de la caisse, dans la direction verticale, et pour mémoriser, en synchronisme, trois valeurs discrètes $\beta_0$, $\beta_1$, $\beta_2$ du signal issu de chaque second capteur 12, et donc représentatives de la force exercée par l'amortisseur.

Par contre, dans le cadre de la seconde variante de réalisation, c'est-à-dire dans le cas où le second capteur 12 est un capteur associé au ressort de suspension 2, les moyens de traitement 50 sont de préférence adaptés pour mémoriser deux valeurs discrètes $\gamma_0$, $\gamma_1$ espacées d'un intervalle de temps T du signal issu de chaque premier capteur 11, et donc représentatives de l'accélération de la caisse, dans la direction verticale, et pour mémoriser en synchronisme deux valeurs discrètes $\delta_0$, $\delta_1$ du signal issu de chaque second capteur 12 et représentatives de la force exercée par le ressort.

On va maintenant expliciter le procédé de contrôle conforme à la présente invention.

Ce procédé exploite l'équation définie par le bilan des forces exercées sur les masses suspendues, à savoir:

$$(3) \quad M\ddot{x} + c(\dot{x} - \dot{y}) + K(x - y) = 0$$

dans laquelle:

M représente la masse suspendue,

c représente le coefficient de frottement visqueux de l'amortisseur,

K représente la raideur du ressort,

x représente la hauteur de la fixation supérieure de la suspension par rapport à une référence,

y représente la hauteur de la fixation inférieure de la suspension par rapport à la même référence.

On remarquera que $c(\dot{x}-\dot{y})$ représente la force exercée par l'amortisseur tandis que $K(x-y)$ représente la force exercée par le ressort de suspension.

On va maintenant expliciter la première variante de la présente invention schématisée sur la figure 4.

La variante de réalisation qui va être décrite par la suite est basée sur une approximation linéaire du signal électrique délivré par le capteur. Cette disposition ne doit cependant pas être considérée comme limitative.

Comme évoqué précédemment, dans le cadre de cette première variante, le second capteur 12 est un capteur de force monté sur l'amortisseur 3.

Par ailleurs, les moyens de traitement et de mémorisation 50 sont adaptés pour mémoriser 3 valeurs discrètes $\alpha_0$, $\alpha_1$, $\alpha_2$ du signal issu du premier capteur 11 et espacées d'un intervalle de temps T, et pour mémoriser en synchronisme 3 valeurs discrètes $\beta_0$, $\beta_1$, $\beta_2$ du signal issu du second capteur 12 et espacées du même intervalle de temps T.

Ce relevé de mesures permet d'écrire:

$$(4) \quad M\alpha_0 + K(x - y)_0 + \beta_0 = 0$$
$$(5) \quad M\alpha_1 + K(x - y)_1 + \beta_1 = 0$$
$$(6) \quad M\alpha_2 + K(x - y)_2 + \beta_2 = 0$$

On tire des relations (4) et (5) que

$$(7) \quad (x - y)_0 = - \frac{M\alpha_0 + \beta_0}{K} \quad \text{et}$$

$$(8) \quad (x - y)_1 = - \frac{M\alpha_1 + \beta_1}{K}$$

Par ailleurs on peut écrire:

$$(9) \quad (x - y)_1 = (x - y)_0 + (\dot{x} - \dot{y})_0 T \quad ,$$

Donc, en combinant les relations (7), (8) et (9) on obtient:

$$(10) \quad -\frac{M\alpha_1 + \beta_1}{K} = -\frac{M\alpha_0 + \beta_0}{K} + (\dot{x} - \dot{y})_0 T$$

$$= -\frac{M\alpha_0 + \beta_0}{K} + \frac{\beta_0}{C} T$$

En tenant compte de la troisième mesure on peut de plus écrire:

$$(11) \quad M(\alpha_1 - \alpha_2) = (\beta_2 - \beta_1) + \frac{KT\beta_1}{C}$$

Soit, en utilisant les équations (10) et (11):

$$(1) \quad C = KT\frac{\dot\beta_1 (\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

$$(12) \quad M = \frac{(\dot\beta_1 - \beta_0)\beta_1 - (\beta_2 - \beta_1)\beta_0}{(\alpha_0 - \alpha_1)\beta_1 - (\alpha_1 - \alpha_2)\beta_0}$$

La variante du procédé conforme à la présente invention basée sur l'exploitation de la relation (1) précitée est illustrée schématiquement sur la figure 4.

Comme cela est illustré sur cette figure, le procédé de contrôle conforme à la présente invention consiste dans un premier temps 100 à mesurer et mémoriser trois valeurs discrètes $\alpha = \dot{x}$ du signal généré par chaque capteur 11, 21, 31, 41, et à mesurer et mémoriser trois valeurs discrètes $\beta = c(\dot{x}-\dot{y})$ du signal généré par chaque second capteur 12, 22, 32, 42.

La seconde étape du procédé de contrôle, référencée 110 sur la figure 4, consiste alors à calculer la valeur de c, c'est-à-dire du coefficient de frottement visqueux de l'amortisseur, sur la base de la relation (1).

Une fois le calcul établi, le procédé de contrôle conforme à la présente invention s'achève par une étape d'exploitation, par exemple de visualisation, référencée schématiquement 120 sur la figure 4.

Cette étape d'exploitation 120 peut faire l'objet de diverses variantes.

Selon une première de ces variantes, l'étape d'exploitation 120 consiste à comparer la valeur du coefficient de frottement c calculée à l'aide de la formule (1) avec une valeur de seuil et à afficher une alarme lorsque la valeur calculée du coefficient de frottement tombe en dessous de la valeur seuil. De préférence et plus précisément on utilise pour cela plusieurs valeurs de seuil correspondant respectivement aux zones caractéristiques de la courbe force/vitesse de l'amortisseur par exemple 4 valeurs de seuil. On a en effet rappelé dans le préambule de cette demande que comme cela est représenté sur la figure 1 annexée, chaque partie de la courbe : force appliquée sur la tige/vitesse de la tige, correspondant respectivement à la détente et à la compression de l'amortisseur comporte deux zones, l'une linéaire, l'autre de type parabolique.

Néanmoins, on peut aussi utiliser deux valeurs de seuil, l'une pour la phase compression, l'autre pour la phase détente, ou encore un nombre plus important de valeurs seuil pour approximer un seuil de type parabolique aux origines de la courbe force/vitesse.

Selon une seconde de ces variantes, l'étape d'exploitation 120 consiste à exploiter directement, par exemple par visualisation, une information analogique représentative du coefficient de frottement c.

On remarquera de plus que cette technique de mesure permet de déterminer la valeur de la masse par essieu, sur la base de la relation (12), à l'aide des moyens de traitement 50.

L'analyse de cette valeur peut être utilisée par exemple pour détecter une éventuelle surcharge du véhicule, ou toute autre fonction utilisée pour l'asservissement de la suspension.

On va maintenant expliciter la seconde variante de la présente invention schématisée sur la figure 5.

Comme évoqué précédemment le second capteur est alors un capteur 12' associé au ressort de suspension 2 et délivrant une information proportionnelle à la force exercée par celui-ci.

Par ailleurs, les moyens de traitement et de mémorisation 50 sont adaptés pour mémoriser 2 valeurs discrètes $\gamma_0$, $\gamma_1$ du signal issu du premier capteur et espacées d'un intervalle de temps T, et pour mémoriser en synchronisme 2 valeurs discrètes $\delta_0$, $\delta_1$ du signal issu du second capteur et espacées d'un intervalle de temps T.

Ce relevé de mesures permet d'écrire:

$$(13) \quad M\gamma_0 + c(\dot{x} - \dot{y})_0 + \delta_0 = 0$$

$$(14) \quad M\gamma_1 + c(\dot{x} - \dot{y})_1 + \delta_1 = 0$$

En combinant les relations (13), (14) et (9) on obtient:

$$(2) \quad c = KT \frac{\gamma_0 \delta_1 - \gamma_1 \delta_0}{(\gamma_1 - \gamma_0)(\delta_1 - \delta_0)}$$

et

$$(15) \quad M = K \frac{\delta_1 - \delta_0}{\gamma_0 - \gamma_1}$$

La seconde variante du procédé conforme à la présente invention basée sur l'exploitation de la relation (2) précitée est illustrée schématiquement sur la figure 5.

Comme cela est illustré sur cette figure, le procédé de contrôle conforme à la présente invention consiste dans un premier temps 200 à mesurer et mémoriser deux valeurs discrètes $\gamma=\ddot{x}$ du signal généré par chaque premier capteur 11, 21, 31, 41 et à mesurer et à mémoriser deux valeurs discrètes $\delta = K(x-y)$ du signal généré par chaque second capteur 12, 22, 32 et 42.

La seconde étape du procédé de contrôle, référencée 210 sur la figure 5, consiste alors à calculer la valeur de c, c'est-à-dire du coefficient de frottement visqueux de l'amortisseur, sur la base de la relation (2).

Une fois ce calcul établi, le procédé de contrôle conforme à la présente invention s'achève par une étape d'exploitation, par exemple de visualisation référencée schématiquement 220 sur la figure 5.

Cette étape d'exploitation 220 peut faire l'objet de diverses variantes.

Selon une première de ces variantes, l'étape d'exploitation 220 consiste à comparer la valeur du coefficient de frottement c calculée à l'aide de la formule (2) avec une valeur de seuil et à afficher une alarme lorsque la valeur calculée du coefficient de frottement tombe en dessous de la valeur seuil. De préférence et plus précisément, on utilise pour cela plusieurs valeurs de seuil correspondant respectivement aux zones caractéristiques de la courbe force/vitesse de l'amortisseur, par exemple 4 valeurs de seuil. On a effet rappelé dans le préambule de cette demande que comme cela est représenté sur la figure 1 annexée, chaque partie de la courbe : force appliquée sur la tige/vitesse de la tige, correspondant respectivement à la détente et à la compression de l'amortisseur comporte deux zones, l'une linéaire, l'autre de type parabolique.

Néanmoins on peut aussi utiliser deux valeurs de seuil, l'une pour la phase compression, l'autre pour la phase détente, ou encore un nombre plus important de valeurs seuil pour approximer un seuil de type parabolique aux origines de la courbe force/vitesse.

Selon une seconde de ces variantes, l'étape d'exploitation 220 consiste à exploiter directement par exemple par visualisation, une information analogique représentative du coefficient de frottement c.

On remarquera de plus que cette technique de mesure permet de déterminer la valeur de la masse par essieu, sur la base de la relation (15), à l'aide des moyens de traitement 50.

L'analyse de cette valeur peut être utilisée par exemple pour détecter une éventuelle surcharge du véhicule, ou toute autre fonction utilisée pour l'asservissement de la suspension.

Bien entendu, la présente invention n'est pas limitée au mode de réalisation qui vient d'être décrit mais s'étend à toute variante conforme à son esprit.

La présente invention peut en particulier être appliquée pour la commande de suspensions asservies par exemple pour commander la dureté de la suspension, ou encore pour opérer une correction d'assiette du véhicule.

Le dispositif de contrôle conforme à la présente invention peut également comporter une sortie pour station diagnostic permettant de tracer la courbe caractéristique du coefficient de frottement c.

La présente invention trouve application aussi bien dans le cas des suspensions à roues indépendantes que dans le cas des suspensions à pont rigide.

De préférence les moyens de visualisation 60 sont adaptés pour délivrer une information spécifique pour chacune des suspensions, soit sous forme d'un témoin d'alarme dans le cas d'une comparaison avec une valeur seuil comme précédemment évoqué, soit sous forme d'un affichage analogique de chacun des coefficients c mesurés.

**Revendications**

1. Procédé de contrôle de la suspension d'un véhicule comprenant un ressort et un amortisseur, comprenant les étapes consistant à:

i) générer à l'aide d'un premier capteur (11) un signal représentant l'accélération des masses suspendues dans la direction verticale,

ii) générer à l'aide d'un second capteur (12) un signal dépendant de la force exercée par l'un des éléments – ressort ou amortisseur – de la suspension,

iii) déterminer (110, 210) la valeur du coefficient de frottement visqueux de l'amortisseur à l'aide des signaux générés par les capteurs et sur la base de l'équation définie par le bilan des forces exercées sur les masses suspendues caractérisé par le fait que le second capteur (12) est un capteur de force monté sur l'amortisseur (3), qui délivre un signal représentatif de la vitesse de déplacement de la tige de l'amortisseur, et caractérisé par le fait que:

– l'étape i) consiste à réaliser à l'aide du premier capteur (11) la mesure de 3 valeurs discrètes $\alpha_0$, $\alpha_1$, $\alpha_2$ espacées d'un intervalle de temps T du signal représentatif de l'accélération des masses suspendues dans la direction verticale,

– l'étape ii) consiste à réaliser à l'aide du second capteur (12) et en synchronisme la mesure de 3 valeurs discrètes $\beta_0$, $\beta_1$, $\beta_2$ du signal représentatif de la force exercée par l'amortisseur, et

– l'étape iii) consiste à déterminer la valeur du coefficient de frottement visqueux de l'amortisseur sur la base de la relation:

$$(1) \qquad C = KT \frac{\beta_1(\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

dans laquelle:

K représente la raideur du ressort.

2. Procédé de contrôle de la suspension d'un véhicule comprenant, un ressort et un amortisseur comprenant les étapes consistant à:

i) générer à l'aide d'un premier capteur (11) un signal représentant l'accélération des masses suspendues dans la direction verticale,

ii) générer à l'aide d'un second capteur (12) un signal dépendant de la force exercée par l'un des éléments – ressort ou amortisseur – de la suspension,

iii) déterminer (110, 210) la valeur du coefficient de frottement visqueux de l'amortisseur à l'aide des signaux générés par les capteurs et sur la base de l'équation définie par le bilan des forces exercées sur les masses suspendues caractérisé par le fait que le second capteur est un capteur de force monté sur le ressort, qui délivre un signal représentatif de l'élongation du ressort (2), et caractérisé par le fait que:

– l'étape i) consiste à réaliser à l'aide du premier capteur (11) la mesure de deux valeurs discrètes $\gamma_0$, $\gamma_1$ espacées d'un intervalle de temps T du signal représentatif de l'accélération des masses suspendues dans la direction verticale,

– l'étape ii) consiste à réaliser en synchronisme à l'aide du second capteur (12') la mesure de deux valeurs discrètes $\delta_0$, $\delta_1$ du signal représentatif de la force exercée par le ressort et,

– l'étape iii) consiste à déterminer la valeur du coefficient de frottement visqueux de l'amortisseur sur la base de la relation:

$$(2) \qquad C = KT \frac{\gamma_0\delta_1 - \gamma_1\delta_0}{(\gamma_1 - \gamma_0)(\delta_1 - \delta_0)}$$

dans laquelle:

K représente la raideur du ressort.

3. Dispositif de contrôle pour la mise en œuvre du procédé conforme à la revendication 1 comprenant

– un premier capteur (11) générant un signal représentant l'accélération des masses suspendues du vehicule dans la direction verticale,

– un second capteur (12) générant un signal dépendant de la force exercée par l'un des éléments – ressort ou amortisseur – de la suspension,

– des moyens de traitement (50) adaptés pour déterminer la valeur du coefficient de frottement visqueux de l'amortisseur à l'aide des signaux générés par le premier et le second capteurs, sur la base de l'équation définie par le bilan des forces exercées sur les masses suspendues caractérisé par le fait que le second capteur (12) est un capteur de force monté sur l'amortisseur pour délivrer un signal représentatif de la vitesse de déplacement de la tige de l'amortisseur, et caractérisé par le fait que les moyens de traitement (50) sont conçus pour déterminer la valeur du coefficient de frottement visqueux de l'amortisseur sur la base de la relation:

EP 0 220 115 B1

$$(1) \qquad C = K.T \ \frac{\beta_1(\alpha_0-\alpha_1)-\beta_0(\alpha_1-\alpha_2)}{(\alpha_1-\alpha_2)(\beta_1-\beta_0)-(\alpha_0-\alpha_1)(\beta_2-\beta_1)}$$

dans laquelle $\alpha_0$, $\alpha_1$ et $\alpha_2$ représentent trois valeurs discrètes espacées d'un intervalle de temps T, du signal issu du premier capteur, $\beta_0$, $\beta_1$ et $\beta_2$ représentent trois valeurs discrètes simultanées aux valeurs $\alpha_0$, $\alpha_1$ et $\alpha_2$, du signal issu du second capteur, et K représente la raideur du ressort.

4. Dispositif de contrôle pour la mise en œuvre du procédé conforme à la revendication 2, caractérisé par le fait qu'il comprend:
– un premier capteur (11) générant un signal représentant l'accélération des masses suspendues du véhicule dans la direction verticale,
– un second capteur (12) générant un signal dépendant de la force exercée par l'un des éléments – ressort ou amortisseur – de la suspension,
– des moyens de traitement (50) adaptés pour déterminer la valeur du coefficient de frottement visqueux de l'amortisseur à l'aide des signaux générés par le premier et le second capteurs, sur la base de l'équation définie par le bilan des forces exercées sur les masses suspendues, caractérisé par le fait que le second capteur est un capteur de force monté sur le ressort de suspension pour délivrer un signal représentatif de l'élongation du ressort, et caractérisé par le fait que les moyens de traitement (50) sont conçus pour déterminer la valeur du coefficient de frottement visqueux de l'amortisseur sur la base de la relation:

$$C = KT \ \frac{\gamma_0\delta_1 - \gamma_1\delta_0}{(\gamma_1-\gamma_0)(\delta_1 - \delta_0)}$$

dans laquelle
$\gamma_0$ et $\gamma_1$ représentent deux valeurs discrètes espacées d'un intervalle de temps T, du signal issu du premier capteur,
$\delta_0$ et $\delta_1$ représentent deux valeurs discrètes, simultanées aux valeurs $\gamma_0$ et $\gamma_1$, du signal issu du second capteur, et
K représente la raideur du ressort.

5. Dispositif de contrôle selon l'une des revendications 3 ou 4, caractérisé par le fait qu'il comprend des moyens de comparaison adaptés pour comparer la valeur du coefficient de frottement c déterminé avec une valeur de seuil et des moyens de visualisation adaptés pour afficher une alarme lorsque la valeur déterminée du coefficient de frottement tombe en dessous de la valeur seuil.

6. Dispositif de contrôle selon la revendication 5, caractérisé par le fait que les moyens de comparaison utilisent plusieurs valeurs de seuil correspondant respectivement aux zones caractéristiques de la courbe force/vitesse de l'amortisseur (3).

7. Dispositif de contrôle selon l'une des revendications 3 ou 4, caractérisé par le fait qu'il comprend des moyens d'exploitation adaptés pour exploiter par exemple par visualisation une information analogique représentative de la valeur mesurée du coefficient de frottement.

8. Dispositif de contrôle selon l'une des revendications 3 à 7, caractérisé par le fait qu'il comprend une paire de premier et second capteurs (11, 12; 21, 22; 31, 32; 41, 42) pour chaque suspension.

9. Dispositif de contrôle selon la revendication 3 caractérisé par le fait que le second capteur (12) est un capteur de force monté sur la fixation supérieure ou inférieure de l'amortisseur (3).

10. Dispositif de contrôle selon la revendication 4 caractérisé par le fait que le second capteur (12) est un capteur sensible au déplacement relatif masses suspendues/masses non suspendues.

11. Dispositif de contrôle selon la revendication 10 caractérisé par le fait que le second capteur (12) est une cellule piézoélectrique disposée entre deux spires du ressort.

12. Dispositif de contrôle selon la revendication 4 caractérisé par le fait que le second capteur (12) est un capteur de force intercalé entre le ressort de la suspension et les masses suspendues/non suspendues.

13. Application du dispositif conforme à l'une des revendications 3 à 12, à la commande de suspensions asservies.

14. Application du dispositif conforme à l'une des revendications 3 à 12 à la détection de surcharge du véhicule.

**Claims**

1. Method for checking the suspension of a vehicle comprising a spring and a shock absorber, comprising the stages consisting of:
i) generating by means of a first sensor (11) a signal representing the acceleration of the suspended masses in the vertical direction,

ii) generating by means of a second sensor (12) a signal dependent on the force exerted by one of the elements - spring or shock absorber - of the suspension,

iii) determining (110, 210) the value of the coefficient of viscous friction of the shock absorber by means of the signals generated by the sensors and on the basis of the equation defined by the balance of forces exerted on the suspended masses, characterised by the fact that the second sensor (12) is a force sensor mounted on the shock absorber (3), which supplies a signal representative of the speed of movement of the rod of the shock absorber, and characterised by the fact that:

- stage i) consists of measuring by means of the first sensor (11) three discrete values $\alpha_0$, $\alpha_1$, $\alpha_2$ separated by a time interval T of the signal representative of the acceleration of the suspended masses in the vertical direction,

- the stage ii) consists of measuring by means of the second sensor (12) and in synchronism, three discrete values $\beta_0$, $\beta_1$, $\beta_2$ of the signal representative of the force exerted by the shock absorber, and

- the stage iii) consists of determining the value of the coefficient of viscous friction of the shock absorber on the basis of the relationship:

$$(1) \qquad C = KT \; \frac{\beta_1(\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

in which:

K represents the stiffness of the spring.

2. Method for checking the suspension of a vehicle comprising a spring and a shock absorber comprising the stages consisting of:

i) generating by means of a first sensor (11) a signal representing the acceleration of the suspended masses in the vertical direction,

ii) generating by means of a second sensor (12) a signal dependent on the force exerted by one of the elements - spring or shock absorber - of the suspension,

iii) determining (110, 210) the value of the coefficient of viscous friction of the shock absorber by means of the signals generated by the sensors and on the basis of the equation defined by the balance of forces exerted on the suspended masses, characterised by the fact that the second sensor is a force sensor mounted on the spring, which supplies a signal representative of the elongation of the spring (2), and characterised by the fact that:

- the stage i) consists of measuring by means of the first sensor (11) two discrete values $\gamma_0$, $\gamma_1$, spaced apart by a time interval T of the signal representative of the acceleration of the suspended masses in the vertical direction,

- the stage ii) consists of measuring in synchronism by means of the second sensor (12'), two discrete values $\delta_0$, $\delta_1$ of the signal representative of the force exerted by the spring and,

- the stage iii) consists of determining the value of the coefficient of viscous friction of the shock absorber on the basis of the relationship:

$$(2) \qquad C = KT \; \frac{\gamma_0\delta_1 - \gamma_1\delta_0}{(\gamma_1 - \gamma_0)(\delta_1 - \delta_0)}$$

in which:

K represents the stiffness of the spring.

3. Checking apparatus for carrying out the method according to Claim 1, comprising

- a first sensor (11) generating a signal representing the acceleration of the suspended masses of the vehicle in the vertical direction,

- a second sensor (12) generating a signal dependent on the force exerted by one of the elements - spring or shock absorber - of the suspension,

- processing means (50) adapted for determining the value of the coefficient of viscous friction of the shock absorber by means of the signals generated by the first and second sensors, on the basis of the equation defined by the balance of the forces exerted on the suspended masses, characterised by the fact that the second sensor (12) is a force sensor mounted on the shock absorber in order to supply a signal representative of the speed of displacement of the rod of the shock absorber, and characterised by the fact that the processing means (50) are designed for determining the value of the coefficient of viscous friction of the shock absorber on the basis of the relationship:

(1)
$$C = K.T \frac{\beta_1(\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

in which $\alpha_0$, $\alpha_1$ and $\alpha_2$ represent three discrete values spaced apart by a time interval T, of the signal coming from the first sensor, $\beta_0$, $\beta_1$ and $\beta_2$ represent three discrete values simultaneous to the values $\alpha_0$, $\alpha_1$ and $\alpha_2$, of the signal coming from the second sensor, and K represents the stiffness of the spring.

4. Checking apparatus for carrying out the method according to Claim 2, characterised by the fact that it comprises:
- a first sensor (11) generating a signal representing the acceleration of the suspended masses of the vehicle in the vertical direction,
- a second sensor (12) generating a signal dependent on the force exerted by one of the elements - spring or shock absorber - of the suspension,
- processing means (50) adapted for determining the value of the coefficient of viscous friction of the shock absorber by means of the signals generated by the first and second sensors, on the basis of the equation defined by the balance of forces exerted on the suspended masses, characterised by the fact that the second sensor is a force sensor mounted on the suspension spring for supplying a signal representative of the elongation of the spring, and characterised by the fact that the processing means (50) are designed for determining the value of the coefficient of viscous friction of the shock absorber on the basis of the relationship:

$$C = KT \frac{\gamma_0 \delta_1 - \gamma_1 \delta_0}{(\gamma_1 - \gamma_0)(\delta_1 - \delta_0)}$$

in which
$\gamma_0$ and $\gamma_1$ represent two discrete values spaced apart by a time interval T, of the signal coming from the first sensor,
$\delta_0$ and $\delta_1$ represent two discrete values, simultaneous to the value $\gamma_0$ and $\gamma_1$, of the signal coming from the second sensor, and
K represents the stiffness of the spring.

5. Checking apparatus according to one of Claims 3 or 4, characterised by the fact that it comprises comparison means adapted for comparing the value of the coefficient of friction c determined with a threshold value and visualisation means adapted for displaying an alarm when the determined value of the coefficient of friction falls below the threshold value.

6. Checking apparatus according to Claim 5, characterised by the fact that the comparison means use several threshold values corresponding respectively to the characteristic areas of the force/speed curve of the shock absorber (3).

7. Checking apparatus according to one of Claims 3 or 4, characterised by the fact that it comprises exploitation means adapted for exploiting, for example by visualisation, analog information representative of the measured value of the coefficient of friction.

8. Checking apparatus according to one of Claims 3 to 7, characterised by the fact that it comprises a pair of first and second sensors (11, 12; 21, 22; 31, 32; 41, 42) for each suspension.

9. Checking apparatus according to Claim 3, characterised by the fact that the second sensor (12) is a force sensor mounted on the upper or lower anchorage of the shock absorber (3).

10. Checking apparatus according to Claim 4, characterised by the fact that the second sensor (12) is a sensor sensitive to the relative displacement of the suspended masses/non-suspended masses.

11. Checking apparatus according to Claim 10, characterised by the fact that the second sensor (12) is a piezoelectric cell disposed between two turns of the spring.

12. Checking apparatus according to Claim 4, characterised by the fact that the second sensor (12) is a force sensor interposed between the spring of the suspension and the suspended/non-suspended masses.

13. Application of the apparatus according to one of Claims 3 to 12, to the control of servo suspensions.

14. Application of the apparatus according to one of Claims 3 to 12, to the detection of an overload of the vehicle.

**Patentansprüche**

1. Verfahren zum Überwachen der eine Feder und eine Dämpfungseinrichtung aufweisenden Aufhängung eines Fahrzeuges, mit den Schritten:

(i) Erzeugen eines für die Beschleunigung der gefederten Massen in vertikaler Richtung repräsentativen Signals mit Hilfe eines ersten Aufnehmers (11),

(ii) Erzeugen eines von der durch eines der Elemente – Feder oder Dämpfungseinrichtung – der Aufhängung ausgeübten Kraft abhängigen Signals mit Hilfe eines zweiten Aufnehmers (12),

(iii) Bestimmen (110, 210) des Wertes des Koeffizienten der viskosen Reibung der Dämpfungseinrichtung mittels der durch die Aufnehmer erzeugten Signale und auf der Grundlage der durch die Bilanz der auf die gefederten Massen ausgeübten Kräfte definierten Gleichung, dadurch gekennzeichnet, daß der zweite Aufnehmer (12) ein auf der Dämpfungseinrichtung (3) angebrachter Kraftaufnehmer ist, der ein für die Geschwindigkeit der Verschiebung des Gestänges der Dämpfungseinrichtung repräsentatives Signal liefert, und dadurch gekennzeichnet, daß

– der Schritt (i) darin besteht, mittels des ersten Aufnehmers (11) im Zeitabstand T die Messung von 3 diskreten Werten $\alpha_0$, $\alpha_1$, $\alpha_2$ des Signals, das repräsentativ für die Beschleunigung der gefederten Massen in vertikaler Richtung ist, durchzuführen,

– der Schritt (ii) darin besteht, mittels des zweiten Aufnehmers (12) und gleichzeitig die Messung von 3 diskreten Werten $\beta_0$, $\beta_1$, $\beta_2$ des für die durch die Dämpfungseinrichtung ausgeübte Kraft repräsentativen Signals durchzuführen und

– der Schritt (iii) darin besteht, den Wert des Koeffizienten der viskosen Reibung auf der Grundlage der Beziehung

$$(1) \quad C = KT \frac{\beta_1(\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

zu bestimmen, wobei K die Federhärte bezeichnet.

2. Verfahren zum Überwachen der eine Feder und eine Dämpfungseinrichtung aufweisenden Aufhängung eines Fahrzeuges, mit den Schritten:

(i) Erzeugen eines für die Beschleunigung der gefederten Massen in vertikaler Richtung repräsentativen Signals mit Hilfe eines ersten Aufnehmers (11),

(ii) Erzeugen eines von der durch eines der Elemente – Feder oder Dämpfungseinrichtung – der Aufhängung ausgeübten Kraft abhängigen Signals mit Hilfe eines zweiten Aufnehmers (12),

(iii) Bestimmen (110, 210) des Wertes des Koeffizienten der viskosen Reibung der Dämpfungseinrichtung mittels der durch die Aufnehmer erzeugten Signale und auf der Grundlage der durch die Bilanz der auf die gefederten Massen ausgeübten Kräfte definierten Gleichung, dadurch gekennzeichnet, daß der zweite Aufnehmer (12) ein auf der Feder angebrachter Kraftaufnehmer ist, der ein für die Elongation der Feder (2) repräsentatives Signal liefert, und dadurch gekennzeichnet, daß

– der Schritt (i) darin besteht, mit Hilfe des ersten Aufnehmers (11) im Zeitabstand T die Messung von zwei diskreten Werten $\gamma_0$, $\gamma_1$ des Signals, das repräsentativ für die Beschleunigung der gefederten Massen in vertikaler Richtung ist, durchzuführen,

– der Schritt (ii) darin besteht, mittels des zweiten Aufnehmers (12') und gleichzeitig die Messung von zwei diskreten Werten $\delta_0$, $\delta_1$ des für die durch die Feder ausgeübte Kraft repräsentativen Signals durchzuführen, und

– der Schritt (iii) darin besteht, den Wert des Koeffizienten der viskosen Reibung auf der Grundlage der Beziehung

$$C = KT \frac{\gamma_0 \delta_1 - \gamma_1 \delta_0}{(\gamma_1 - \gamma_0)(\delta_1 - \delta_0)}$$

zu bestimmen, wobei K die Federhärte bezeichnet.

3. Überwachungsvorrichtung zum Durchführen des Verfahrens nach Anspruch 1, mit

– einem ersten Aufnehmer (11) zum Erzeugen eines für die Beschleunigung der gefederten Massen in vertikaler Richtung repräsentativen Signals,

– einem zweiten Aufnehmer (12) zum Erzeugen eines von der durch eines der Elemente – Feder oder Dämpfungseinrichtung – der Aufhängung ausgeübten Kraft abhängigen Signals,

– Verarbeitungseinrichtung (50) zum Bestimmen des Wertes des Koeffizienten der viskosen Reibung der Dämpfungseinrichtung mittels der durch den ersten und zweiten Aufnehmer erzeugten Signale und auf der Grundlage der durch die Bilanz der auf die gefederten Massen ausgeübten Kräfte definierten Gleichung, dadurch gekennzeichnet, daß der zweite Aufnehmer (12) ein auf der Dämpfungseinrichtung (3) angebrachter Kraftaufnehmer ist, der ein für die Geschwindigkeit der Verschiebung des Gestänges der Dämpfungseinrichtung repräsentatives Signal liefert, und dadurch gekennzeichnet, daß die Verarbeitungseinrichtungen (50) zum Bestimmen des Wertes des Koeffizienten der viskosen Reibung auf der Grundlage der Beziehung

$$(1) \quad C = K.T \; \frac{\beta_1(\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

ausgelegt sind, wobei $\alpha_0$, $\alpha_1$, $\alpha_2$ drei vom ersten Aufnehmer gelieferte diskrete Werte im Zeitabstand T darstellen, $\beta_0$, $\beta_1$ und $\beta_2$ drei vom zweiten Aufnehmer geliefert und mit $\alpha_0$, $\alpha_1$ und $\alpha_2$ gleichzeitig bestimmte diskrete Werte darstellen, und K die Federhärte bezeichnet.

4. Überwachungsvorrichtung zum Durchführen des Verfahrens nach Anspruch 2 mit
– einem ersten Aufnehmer (11) zum Erzeugen eines für die Beschleunigung der gefederten Massen in vertikaler Richtung repräsentativen Signals,
– einem zweiten Aufnehmer (12) zum Erzeugen eines von der durch eines der Elemente – Feder oder Dämpfungseinrichtung – der Aufhängung ausgeübten Kraft abhängigen Signals,
– Verarbeitungseinrichtungen (50) zum Bestimmen des Koeffizienten der viskosen Reibung der Dämpfungseinrichtung mittels der durch den ersten und zweiten Aufnehmer erzeugten Signale und auf der Grundlage der durch die Bilanz der auf die gefederten Massen ausgeübten Kräfte definierten Gleichung, dadurch gekennzeichnet, daß der zweite Aufnehmer (12) ein auf der Feder der Aufhängung angebrachter Kraftaufnehmer ist, der ein für die Elongation der Feder (2) repräsentatives Signal liefert, und dadurch gekennzeichnet, daß die Verarbeitungseinrichtungen (50) zum Bestimmen des Wertes des Koeffizienten der viskosen Reibung auf der Grundlage der Beziehung

$$C = KT \; \frac{\gamma_0 \delta_1 - \gamma_1 \delta_0}{(\gamma_1 - \gamma_0)(\delta_1 - \delta_0)}$$

ausgelegt sind, wobei
$\gamma_0$ und $\gamma_1$ zwei diskrete Werte im Zeitabstand T des vom ersten Aufnehmer gelieferten Signals darstellen,
$\delta_0$ und $\delta_1$ zwei gleichzeitig mit den Werten $\gamma_0$ und $\gamma_1$ bestimmte diskrete Werte des vom zweiten Aufnehmer gelieferten Signals darstellen, und K die Federhärte bezeichnet.

5. Überwachungsvorrichtung nach einem der Ansprüche 3 oder 4, dadurch gekennzeichnet, daß sie Vergleichseinrichtungen zum Vergleichen des ermittelten Wertes des Reibungskoeffizienten c mit einem Schwellenwert und Visualisierungseinrichtungen zum Anzeigen eines Alarms, wenn der ermittelte Wert des Reibungskoeffizienten unter den Schwellenwert fällt, aufweist.

6. Überwachungsvorrichtung nach Anspruch 5, dadurch gekennzeichnet, daß die Vergleichseinrichtungen mehrere Schwellenwerte verwenden, die jeweils charakteristischen Bereichen der Kurve Kraft/Geschwindigkeit der Dämpfungseinrichtung (3) entsprechen.

7. Überwachungsvorrichtung nach einem der Ansprüche 3 oder 4, dadurch gekennzeichnet, daß sie Auswerteeinrichtungen zum Auswerten, beispielsweise durch Sichtbarmachen, einer den gemessenen Wert des Reibungskoeffizienten darstellenden Analoginformation aufweist.

8. Überwachungsvorrichtung nach einem der Ansprüche 3 bis 7, dadurch gekennzeichnet, daß sie für jede Aufhängung ein Paar erster und zweiter Aufnehmer (11, 12; 21, 22; 31, 32; 41, 42) aufweist.

9. Überwachungsvorrichtung nach Anspruch 3, dadurch gekennzeichnet, daß der zweite Aufnehmer (12) ein an der oberen oder unteren Befestigungsvorrichtung der Dämpfungseinrichtung (3) angebrachter Kraftaufnehmer ist.

10. Überwachungsvorrichtung nach Anspruch 4, dadurch gekennzeichnet, daß der zweite Aufnehmer (12) ein auf die relative Verschiebung gefederte Massen/nicht-gefederte Massen ansprechender Aufnehmer ist.

11. Überwachungsvorrichtung nach Anspruch 10, dadurch gekennzeichnet, daß der zweite Aufnehmer (12) eine zwischen zwei Windungen der Feder untergebrachte piezoelektrische Zelle ist.

12. Überwachungsvorrichtung nach Anspruch 4, dadurch gekennzeichnet, daß der zweite Aufnehmer (12) ein Kraftaufnehmer zwischen der Feder der Aufhängung und den gefederten/nicht-gefederten Massen ist.

13. Anwendung der Vorrichtung gemäß einem der Ansprüche 3 bis 12 für die Steuerung der geregelten Aufhängung.

14. Anwendung der Vorrichtung gemäß einem der Ansprüche 3 bis 12 zum Ermitteln des Überladens des Fahrzeugs.

FIG_1

FIG_3

FIG. 2A

FIG. 2B

MESURE ET MEMORISATION
DE 3 VALEURS

$$\alpha = \ddot{x}$$

$$\beta = C(\dot{x} - \dot{y}) \quad \text{DU SIGNAL}$$

GÉNÉRÉ PAR LES CAPTEURS

100

CALCUL DE

$$C = KT \; \frac{\beta_1(\alpha_0 - \alpha_1) - \beta_0(\alpha_1 - \alpha_2)}{(\alpha_1 - \alpha_2)(\beta_1 - \beta_0) - (\alpha_0 - \alpha_1)(\beta_2 - \beta_1)}$$

110

EXPLOITATION

120

## FIG_4

MESURE ET MEMORISATION
DE 2 VALEURS

$$\gamma = \ddot{x}$$

$$\delta = (x - y) \quad \text{DU SIGNAL}$$

GÉNÉRÉ PAR LES CAPTEURS

200

CALCUL DE

$$C = KT \; \frac{\gamma_0 \delta_1 - \gamma_1 \delta_0}{(\gamma_1 - \gamma_0)(\delta_1 - \delta_0)}$$

210

## FIG_5

EXPLOITATION

220